# EUROPEAN PATENT APPLICATION

(11) **EP 3 026 570 A1**
(43) Date of publication of application: **01.06.2016**
(21) Application number: 14306917.7
(22) Date of filing: 28.11.2014
(51) Int. Cl.: G06F 13/42

(54) **A communication system comprising a full-duplex interface with a mechanism to initiate a data exchange**

(71) Applicant: GEMALTO SA, 92190 Meudon (FR)
(72) Inventor: Tan, Theresa Joy, 92190 Meudon (FR); Durand, Stephane, 92190 Meudon (FR)
(74) Representative: Delaval, Guillaume Laurent

(57) **Abstract**

This invention relates to a system implementing an interface for full-duplex data transfer comprising a master device (400) and at least one slave device (401) connected together by a set of wired connections (404), each of these wired connection being configured to carry one signal having at least two states called active state and passive state, a signal being considered as activated when it switches from passive state to active state, these signal corresponding to at least a chip select signal (CS) generated by the master device (400) and a slave asynchronous signal (SAS) generated by the slave device (401). When the master device (400) wants to initiate a full-duplex data exchange with the at least one slave device (401), the chip select signal (CS) is activated; upon detection of the chip select (CS) signal activation by the slave device (401) and when the slave device is ready to exchange data with the master device (400), the slave asynchronous signal (SAS) is activated; when the chip select signal (CS) and slave asynchronous signal (SAS) are both activated, the master device (400) triggers the full-duplex data exchange

## Description

### TECHNICAL FIELD

The present invention relates to a communication system comprising a full-duplex interface with a mechanism to initiate data transfer and is applicable to electronic interfaces.

### BACKGROUND OF THE INVENTION

A serial interface is an interface wherein information is transferred one bit at a time from a first device toward a second device. A serial interface can implement simplex, half-duplex or full-duplex communications.

The Single Wire Protocol (SWP) as defined in the international standard ETSI TS 102 613 v 9.3.0 is an example of full-duplex communication protocol between a smart card and a host device. This protocol operates in master/slave mode, the smart card being the slave. This protocol is implemented thanks to a single wired connection dedicated to data. The voltage is controlled by the master and the intensity by the slave allowing both master and slave to communicate at the same time.

Another example of existing protocol is the standard de facto called Serial Peripheral Interface (SPI). This protocol also operates in master/slave mode.

The serial peripheral interface is a four wire 102 synchronous interface that enables connection between a single master device 100 and at least one slave device 101.

The four logic signals carried by the four wired connections are:
- CS (Chip Select), which is generated by the master device 100;
- CLK (Clock), which is the system CLK generated by the master device 100;
- MOSI (Master Output, Slave Input), which is used to transmit data from the master device 100 to the slave device 101;
- MISO (Master Input, Slave Output), which is used to transmit data from the slave device 101 to the master device 100.

For easing the reading of the following description, the expression "CS line" refers to the wired connection configured to carry the CS signal. Similarly, the expression "CLK line" refers to the wired connection configured to carry the CLK signal, the expression "MOSI line" refers to the wired connection carrying the MOSI signal and the expression "MISO line" refers to the wired connection carrying the MISO signal.

In a serial peripheral interface, data transfer occurs on MISO and MOSI lines when a master device 100 selects a slave device 101 via the CS line and starts generating the clock via the CLK line. As a convention and for illustration purpose only, it is considered in this description that the MISO and MOSI signals are digital signals having two states.

In this description, the signal carried by the wired connection can be set into at least two states. A first state is called the passive state and a second state is called the active state. As an example, the passive and active states correspond respectively to a low voltage state and to a high voltage state. Alternatively, the passive and active states correspond respectively to a high voltage state and to a low voltage state.

Additionally, a signal is considered as activated when it switches from the passive state to the active state and a signal is considered as deactivated when it switches from the active state to the passive state.

For exchanging data with a slave, the master device 100 selects a slave device 101 by activating the CS signal at a time t_act.

At the same time, the CLK signal is generated and data can be exchanged 200, 201 on the MISO and MOSI lines.

One problem to be solved with an interface of SPI type concerns the discrimination by the master between valid and invalid data provided on the MISO line. In this description, valid data refers to data carrying information whereas invalid data refers to data resulting from no signal or of spurious signals.

In particular, at the time selecting the slave device 101 by activating the CS signal, the master device 100 does not know if the slave is ready to transmit data and it generates the clock without taking it into account. This means that the master device 100 considers that valid data is provided on the MISO line even if it is not the case.

This situation may happen when the slave is occupied with another task for a short period of time 300 when the master device 100 selects the slave device 101 and starts transferring data on the MOSI line. For example, an operation to write data in flash memory may require all the interrupts to be disabled which prevents the slave from receiving the CS activation on time. This may introduce a 2-3 milliseconds delay. The slave device 101 may transmit data toward the master device 100 via the MISO line at a time t_free when it is ready. Therefore, the start of data transmission originated from the master device 100 via the MOSI line is not synchronized with the start of data transmission originated from the slave device 101 via the MISO line. One consequence is that the master device 100 does not know when the valid data, if any, starts. The master may consider invalid data 301 as being valid which can lead to a crash of the system.

One possible solution would be to delay the transmission of data by the slave. For example, the slave can wait for the next selection by CS signal activation. If this is the case, the slave will lose its chance to transmit immediately and will cost the slave device 101 some delay in waiting for the current transfer to finish and the next transfer to start.

The slave device 101 may not have enough memory to store data received from the master during the period of time 300 when the master selected the slave and started the transfer. As a result, all the effort and time of the master device 100 are wasted as the portion of data sent to the slave device 101 which goes being the capacity of the slave's internal memory cannot be memorized.

A solution to this problem would be to introduce a predefined delay before starting the clock but this solution does not guarantee that the slave device 101 will be ready.

An alternative solution would be to implement a software flow control mechanisms such as High-Level Data Link Control (HDLC) in order to detect when data could not be transmitted/received completely and correctly, and retry the transmission. Unfortunately, this technique will introduce additional delays in the communication. It incurs delays and wasted resources usage in comparison with what this invention proposes.

Therefore, there is a need of an improved full-duplex interface allowing synchronizing data transfer between a master device and at least one slave device at the initiation of a communication.

### SUMMARY OF THE INVENTION

The invention concerns a system implementing an interface for full-duplex data transfer comprising a master device and at least one slave device connected together by a set of wired connections. Each of these wired connection is configured to carry one signal having at least two states called active state and passive state, a signal being considered as activated when it switches from passive state to active state, these signal corresponding to at least a chip select signal generated by the master device and a slave asynchronous signal generated by the slave device. When the master device wants to initiate a full-duplex data exchange with the at least one slave device,
- the chip select signal is activated;
- upon detection of the chip select signal activation by the slave device and when the slave device is ready to exchange data with the master device, the slave asynchronous signal is activated;
- when the chip select signal and slave asynchronous signal are both activated, the master device triggers the full-duplex data exchange.

In one embodiment, when the at least one slave device wants to initiate a full-duplex data exchange with the master device,
- the slave asynchronous signal is activated by said slave device;
- upon detection by the master device of the slave asynchronous signal activation and when the master device is ready to exchange data with the slave device, the chip select signal is activated;
- when the chip select signal and slave asynchronous signal are both activated, the master device triggers the full-duplex data exchange.

In one embodiment, the interface is of SPI type.

In one embodiment, the slave asynchronous signal line is implemented by modifying the use of an already existing line carrying an interrupt request signal sent by the slave device to the master device.

In one embodiment, the data exchange is triggered by the master device by generating a clock signal.

The invention also concerns a slave device adapted to full-duplex data exchange with a master device and configured to be connected to said master device by a set of wired connections and to implement an interface for full-duplex data transfer, each of these wired connections being configured to carry one signal having at least two states called active state and passive state, a signal being considered as activated when it switches from passive state to active state, said signals corresponding to at least a chip select signal generated by the master device to select the at least one slave device for a data transfer and a slave asynchronous signal generated by the slave device, said slave device being configured to:
- detect an activation of the chip select signal meaning that the master device wants to initiate a full-duplex data exchange with the slave device;
- as an acknowledgement, activate the slave asynchronous signal once the chip select signal activation is detected and the slave device is ready to exchange data with the master device;
- start exchanging data once the data exchange is triggered by the master device.

In one embodiment, the slave device is configured to:
- activate the slave asynchronous signal when it wants to initiate a data exchange with the master device;
- detect the activation of the chip select signal;
- start exchanging data once the data exchange is triggered by the master device.

In one embodiment, the slave device has an interface of SPI type.

The invention also concerns a master device adapted to exchange data in full-duplex with at least a slave device, said master device being configured to be connected to said slave device by a set of wired connections and to implement an interface for full-duplex data exchange, each of these wired connections being configured to carry one signal having at least two states called active state and passive state, a signal being considered as activated when it switches from passive state to active state and deactivated in the opposite situation, said signals corresponding to at least a chip select signal generated by the master device and a slave asynchronous signal generated by the slave device, wherein said master device is further configured to:
- activate the chip select signal when the master device wants to initiate a full-duplex data exchange with the at least one slave device;
- detect the activation of the slave asynchronous signal meaning that the slave device is ready to exchange data with the master device;
- when the chip select signal and the slave asynchronous signal are both activated, trigger a full-duplex data exchange.

In one embodiment, the master device is configured to:
- detect the activation the slave asynchronous signal generated by a slave device to request a exchange data;
- activate the chip select signal when the master device is ready to exchange data with the slave device;
- when the chip select signal and the slave asynchronous signal are both activated, trigger a full-duplex data exchange.

In one embodiment, the master device triggers the data exchange by generating a clock signal.

In one embodiment, the master device is configured to deactivate the chip select signal if the slave asynchronous signal line activation has not been detected within a predefined amount of time T_b.

In one embodiment, the master device is configured to retry initiating a data transfer after a predefined amount of time T_c after the failure of a first attempt by absence of detection of the slave asynchronous signal activation within said predefined amount of time T_b.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

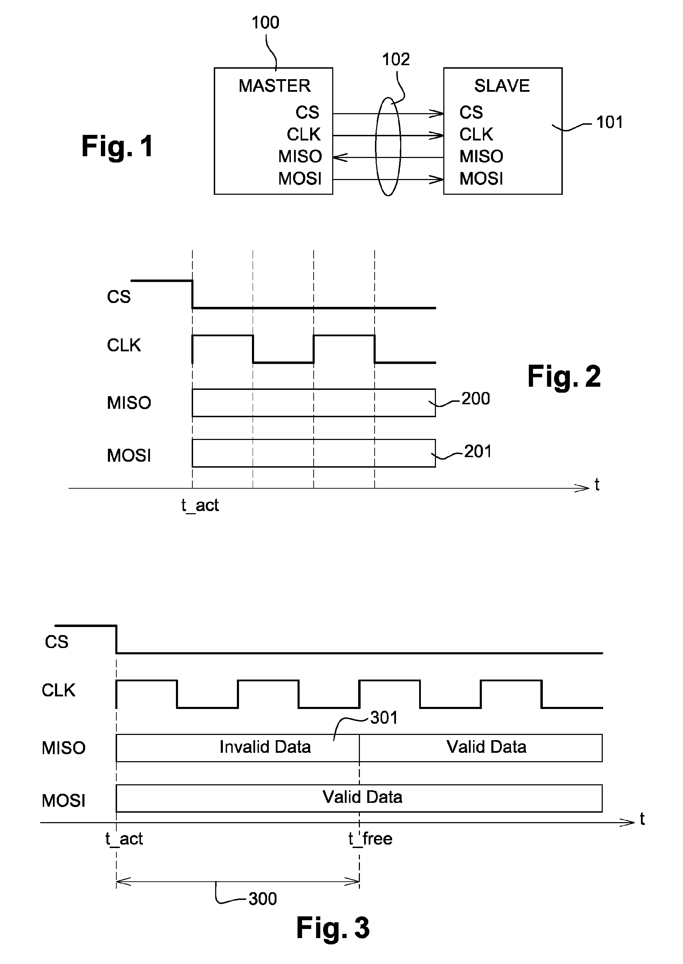

- Figure 1 represents the architecture of a serial peripheral interface;
- Figure 2 illustrates to functioning of a serial peripheral interface;
- Figure 3 gives an example of data exchange between a master device and a slave device in which invalid data are received by the master device at the beginning of the communication;
- Figure 4 illustrates an improved full duplex interface of SPI type;
- Figure 5 provides an example of a data exchange initiated by the master device on an improved SPI interface;
- Figure 6 provides an example of a data exchange initiated by a slave device;
- Figure 7 illustrates an embodiment of the invention in which a master device wants to initiate a communication with a slave device which is unavailable;
- Figure 8 illustrates the end of a communication between a master and a slave;
- Figure 9 illustrates an alternative embodiment of the invention in which a master device wants to initiate a communication with a slave device which is unavailable after a first attempt and available after a second attempt.

### DETAILED DESCRIPTION

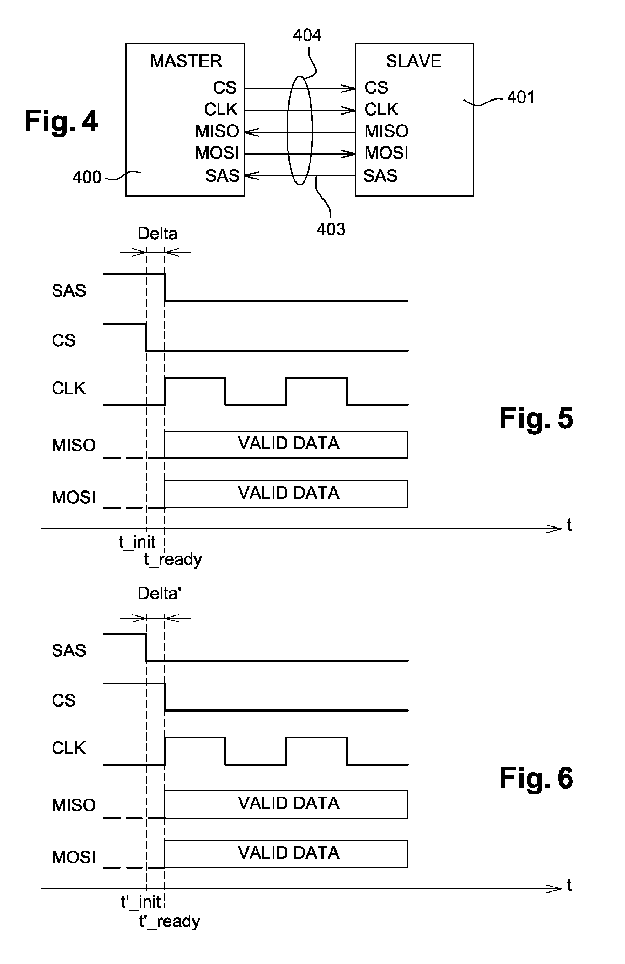

Figure 4 illustrates an improved full duplex interface of SPI type. This invention is described in the context of SPI interface. However, the skilled person will appreciate that it can be applied to other kind of full-duplex electronic interface.

In addition to the already introduced four SPI classical lines CS, CLK, MISO and MOSI, the improved interface uses an additional line 403 designated in this description as Slave's Asynchronous Signal (SAS) line.

In this description, the embodiments of the invention are described with a master and one slave device. However, the invention is applicable with a master device connected to a plurality of slave devices. In that case, a CS line and a SAS line are required for each slave device. In other words, if the master device is connected to two slave devices, two CS lines and two SAS lines should be implemented.

The SAS line can be implemented with a specific wired connection.

Alternatively, the SAS line can be implemented by modifying the use of an already existing line. As an example, several existing SPI interfaces use an additional wire to the standard 4-wire SPI. This purpose of this line is generally to carry an interrupt request signal (IRQ) sent by the slave device to the master device. When the master receives an IRQ signal, it temporarily stops a running program and triggers the execution of a special program associated to the interruption event.

The SAS signal can be activated when the slave wants to send and receive data. Then the master device can select the slave device and can generate the clock signal which triggers the exchange of data between the two devices.

According to an essential aspect of the invention, the SAS signal 403 is activated when the master device wants to initiate a data exchange in order to acknowledge the master device 400 before the starting of a data transfer. The exchange of data is triggered when both CS signal and SAS signal are in active state. This function can be used in conjunction with the function of indicating to the master device 400 that the slave device 401 would like to send and/or receive data from/to the master device 400.

When the master device 400 wants to send and receive data from a slave device 401, it selects the slave by activating the CS signal carried by the CS line.

Before generating the clock signal on the CLK line, the master device 400 waits for an acknowledgement from the slave device 401. In a preferred embodiment, the slave device will activate the signal carried by the SAS line as soon as it is ready to send data on the MISO line and receive data on the MOSI line. In this description, the slave device is considered as "ready" when it has enough resources to send and receive data from/to at any time when required by a master device.

Following the activation of the CS line and after detecting that the SAS signal has been activated as well, the master device generates a clock signal and the exchange of data starts accordingly.

The proposed acknowledgment mechanism allows the master device to control the starting time of the data exchange, this starting time being greater of equal to the time t_ready at which the slave device is ready to receive and send data.

Figure 5 provides an example of a data exchange initiated by the master device on an improved SPI interface.

As the master device wants to initiate a data exchange, it activates the CS signal at a time t_init which means, according to the convention used in this description, switching the CS signal to the low state.

Then, the slave device detects the activation of the CS signal and therefore understands that the master device requests initiating a communication. As an acknowledgment, the slave device activates the SAS signal at a time t_ready when it is ready for sending and receiving data. In this example, the slave device is ready after a time delay Delta = t_ready - t_init.

Then, the master device detects the activation of the SAS signal and activates the CLK signal. Once the CLK signal is activated, the master device starts sending data on the MOSI line and the slave device starts sending data on the MISO line. As a result of the acknowledgment mechanism, only valid data are transmitted on the two lines at the initialisation of the data exchange.

Figure 6 provides an example of a data exchange initiated by a slave device.

In this example, as the slave device wants to initiate the communication, it activates the SAS signal. The master device detects the activation of the SAS signal and, as a consequence, activates the CS signal once it is ready to send and receive data. As both CS and SAS signals are activated, the master device activates the CLK signal. Once the CLK signal is activated, the master device starts sending data on the MOSI line and the slave device starts sending data on the MISO line.

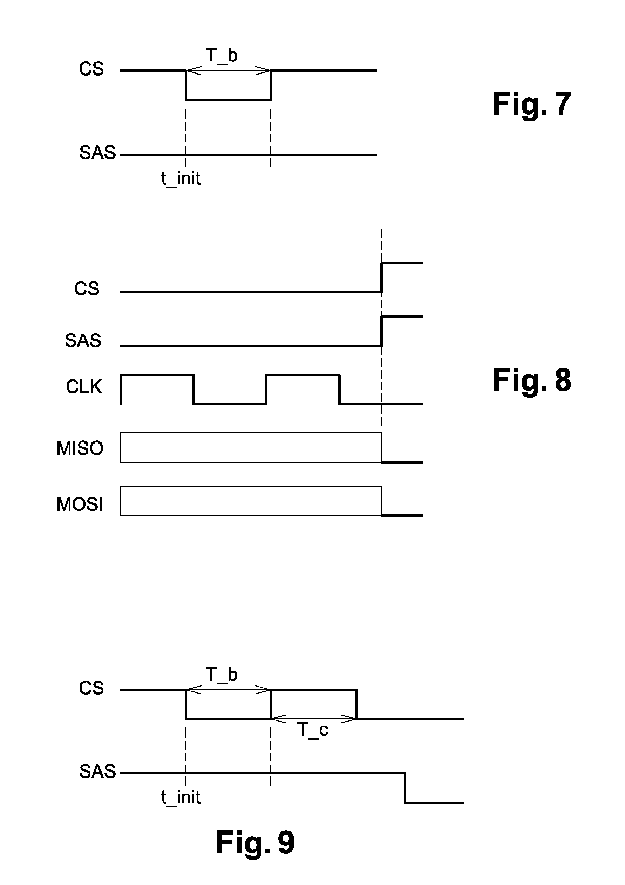

Figure 7 illustrates an embodiment of the invention in which a master device wants to initiate a communication with a slave device which is unavailable.

In this example, a master device activates the CS signal at a time t_unit as it wants to initiate a data exchange with a given slave device. According to the invention, the slave device should normally activate the SAS signal once it is ready to transmit data. In one embodiment, when a master device wants to initiate a data exchange, a time counter starts upon activation of the CS signal. It is then used to check if the SAS line is activated in a time window of predefined duration T_b, said time window starting at time t_init. If the SAS signal is not activated in this time window, this means that the slave device is unavailable, for example because it is not powered or because it has not enough available computing resources to send and receive data. In that case, the CS signal is deactivated at the end of the time period T_b. It is also possible to wait for an additional period T_c and then reactivate the CS signal and wait for the SAS activation in a subsequent T_b period as illustrated on figure 9.

Figure 8 illustrates the end of a communication between a master and a slave.

In order to terminate the communication, the master device deactivates the CLK signal which stops the data transfer on the MISO and MOSI lines and deactivates the CS signal. As a response, the slave device deactivates the SAS signal.

## Claims

1. A system implementing an interface for full-duplex data transfer comprising a master device (400) and at least one slave device (401) connected together by a set of wired connections (404), each of these wired connection being configured to carry one signal having at least two states called active state and passive state, a signal being considered as activated when it switches from passive state to active state, these signal corresponding to at least a chip select signal (CS) generated by the master device (400) and a slave asynchronous signal (SAS) generated by the slave device (401), wherein when the master device (400) wants to initiate a full-duplex data exchange with the at least one slave device (401),
- the chip select signal (CS) is activated;
- upon detection of the chip select (CS) signal activation by the slave device (401) and when the slave device is ready to exchange data with the master device (400), the slave asynchronous signal (SAS) is activated;
- when the chip select signal (CS) and slave asynchronous signal (SAS) are both activated, the master device (400) triggers the full-duplex data exchange.

2. A system according to claim 1, wherein when the at least one slave device (401) wants to initiate a full-duplex data exchange with the master device (400),
- the slave asynchronous signal (SAS) is activated by said slave device (401);
- upon detection by the master device (400) of the slave asynchronous signal (SAS) activation and when the master device (400) is ready to exchange data with the slave device (401), the chip select signal (CS) is activated;
- when the chip select signal (CS) and slave asynchronous signal (SAS) are both activated, the master device (400) triggers the full-duplex data exchange.

3. A system according to one of the preceding claims, wherein the interface is of SPI type.

4. A system according to one of the preceding claims wherein the slave asynchronous signal line (SAS) is implemented by modifying the use of an already existing line carrying an interrupt request signal sent by the slave device (401) to the master device (400).

5. A system according to any of the previous claims wherein the data exchange is triggered by the master device (400) by generating a clock signal (CLK).

6. A slave device (401) adapted to full-duplex data exchange with a master device (400) and configured to be connected to said master device (400) by a set of wired connections (404) and to implement an interface for full-duplex data transfer, each of these wired connections being configured to carry one signal having at least two states called active state and passive state, a signal being considered as activated when it switches from passive state to active state, said signals corresponding to at least a chip select signal (CS) generated by the master device (400) to select the at least one slave device (401) for a data transfer and a slave asynchronous signal (SAS) generated by the slave device (401), wherein said slave device (401) is configured to:
- detect an activation of the chip select signal (CS) meaning that the master device (400) wants to initiate a full-duplex data exchange with the slave device (401);
- as an acknowledgement, activate the slave asynchronous signal (SAS) once the chip select (CS) signal activation is detected and the slave device (401) is ready to exchange data with the master device (400) ;
- start exchanging data once the data exchange is triggered by the master device (400).

7. A slave device according to claim 6, wherein it is configured to:
- activate the slave asynchronous signal (SAS) when it wants to initiate a data exchange with the master device (400);
- detect the activation of the chip select signal (CS);
- start exchanging data once the data exchange is triggered by the master device (400).

8. A slave device according to claim 6 or 7, wherein the interface is of SPI type.

9. A master device (400) adapted to exchange data in full-duplex with at least a slave device (401), said master device (400) being configured to be connected to said slave device (401) by a set of wired connections (404) and to implement an interface for full-duplex data exchange, each of these wired connections being configured to carry one signal having at least two states called active state and passive state, a signal being considered as activated when it switches from passive state to active state and deactivated in the opposite situation, said signals corresponding to at least a chip select signal (CS) generated by the master device (400) and a slave asynchronous signal (SAS) generated by the slave device (401), wherein said master device (400) is further configured to:
- activate the chip select (CS) signal when the master device (400) wants to initiate a full-duplex data exchange with the at least one slave device (401);
- detect the activation of the slave asynchronous signal (SAS) meaning that the slave device (401) is ready to exchange data with the master device (400);
- when the chip select signal (CS) and the slave asynchronous signal (SAS) are both activated, trigger a full-duplex data exchange.

10. A master device (400) according to claim 9, wherein it is configured to:
- detect the activation the slave asynchronous signal (SAS) generated by a slave device (401) requesting to exchange data;
- activate the chip select signal (CS) when the master device (400) is ready to exchange data with the slave device (401);
- when the chip select signal (CS) and the slave asynchronous signal (SAS) are both activated, trigger a full-duplex data exchange.

11. A master device (400) according to claim 9 to 10, wherein the master device (400) triggers the data exchange by generating a clock signal (CLK).

12. A master device (400) according to claim 9, configured to deactivate the chip select (CS) signal if the slave asynchronous signal (SAS) line activation has not been detected within a predefined amount of time T_b.

13. A master device (400) according to claim 12, configured to retry initiating a data transfer after a predefined amount of time T_c after the failure of a first attempt by absence of detection of the slave asynchronous signal (SAS) activation within said predefined amount of time T_b.
